# EUROPEAN PATENT APPLICATION

(11) **EP 2 045 766 A1**
(43) Date of publication of application: **08.04.2009**
(21) Application number: 07021349.1
(22) Date of filing: 01.11.2007
(51) Int. Cl.: G06Q 10/00

(54) **Method for production scheduling in a manufacturing execution system of a shop floor**

(30) Priority: 03.10.2007 EP 07019384
(71) Applicant: SIEMENS AKTIENGESELLSCHAFT, 80333 München (DE)
(72) Inventor: Tiozzo, Fabio, 30015 Chioggia (IT); Fontanot, Paolo, 34074 Monfalcone (IT)
(74) Representative: Fischer, Michael

(57) **Abstract**

The method for production planning in manufacturing execution system of a shop floor comprises the following steps:
- gaining shop floor data (5) from the shop floor (10),
- analyzing the shop floor data (5) by means of a detection logic (2) to detect a disturbance and to provide an opportunity for a corrective action, and
- generating a production schedule (7) based on the detected disturbance and opportunity for a corrective action by means of a scheduler (1).

## Description

The invention relates to a method for production scheduling in a shop floor, whereas the method is a part of a manufacturing execution system.

A Manufacturing Execution System (MES) is a manufacturing management system that can be used to design, measure and control production activities. Some of the benefits with regard to MES solutions are increased traceability, productivity, and quality. Other functions served by MES solutions may include equipment tracking, product genealogy, labor tracking, inventory management, costing, electronic signature capture, defect and resolution monitoring, Key Performance Indicator monitoring and alarming, Executive Dashboards and other various reporting solutions. MES operates process near and is characterized by the direct binding to automation and enables the control of production in real time. For this purpose, MES comprises data acquisition and data preparation such as factory data capture, machine data logging and personnel data acquisition, and in addition, all other processes, which have a time near effect on the manufacturing/production process. The term MES usually refers to an overall system, which covers the range between the Enterprise Resource Planning (ERP) of the enterprise guidance level and the actual manufacturing and/or production process in the manufacturing and/or automation level.

Within the manufacturing environment it is desired to have a real-time production scheduler. The purpose of the real-time scheduler is to cope with production disruptions that affect the feasibility of an original production plan. The real-time scheduler, built-in within a manufacturing execution system, allows automatic disruption management without operator intervention. Currently, many manufacturing environments do not have a real-time scheduler allowing to automatically realign the production schedule with changes in real-time. In absence of a real-time scheduler this task has to be done manually by the personal being in charge of the production control. However, a problem arises of how to detect from the available field signals and data some information about the disturbances that can lead to a production plan disruption. Such information is required by the real-time scheduler to react to the disturbances in order to circumvent or resolve the disruption.

Within the manufacturing execution system a huge amount of field signals and data are available representing events and conditions that can lead to production disturbances. Disadvantageously, these events and conditions are not independent and can be in some way related. Therefore, it is difficult to detect which production disturbances are to be used to trigger the actions of the real-time scheduler.

The study of disruption management originates from the field of airline scheduling, with the purpose of dynamically adjusting an original schedule after a sudden disruption to suit a newly changed operational environment. Although this has been successfully extended with application to production planning and scheduling, the approaches reported in literature are strictly focused only on reacting to such disruptions. In Anthony Anosike and David Zhang, "'An Agent-Oriented Modelling Approach for Agile Manufacturing", Proc. of 3rd International Symposium on Multi-Agent Systems, Large Complex Systems, and E-Businesses (MALCEB'2002), Erfurt, Thuringia, Germany, 8-10 October 2002: 675-681 (Proc. published as CD ISBN 3-9808628-0-1) a method is described which is based on the usage of discrete simulation. In another method for disruption management, described in JP 9216149, a set of autonomous agents is provided for managing the plan disruptions. Other ideas are based on a set of autonomous agents that manage the plan disruptions.

An object of the invention is to provide a method for production scheduling in a shop floor by means of a manufacturing execution system.

The object is achieved according to the invention by a method for production scheduling in a shop floor with the features of the independent claim 1.

The method for production scheduling in a shop floor by means of a manufacturing execution system comprises the following steps:
- gaining shop floor data from the shop floor,
- analyzing the shop floor data by means of a detection logic to detect a disturbance and to provide an opportunity for a corrective action, and
- generating a production schedule based on the detected disturbance and opportunity for a corrective action by means of a scheduler.

Advantageous further developments of the invention arise from the characteristics indicated in the dependent patent claims.

In an embodiment of the method according to the invention the generation of the production schedule takes place in real time.

In a further embodiment of the method according to the invention the scheduler is agent based.

Preferably, in the method according to the invention an analyzing step is provided for analyzing which event has which effect in the shop floor, and the correlations between events and effects are implemented in the detection logic. Therefore, a cause-and-effect analysis technique for the detection of the production disturbances is used.

In another aspect of the method according to the invention in the analyzing step the shop floor data are mapped by means of a cause-and-effect relationship graph.

Over and above this, it can be provided that the detection logic matches the shop floor data with the production plan to gain the disturbance and opportunity for a corrective action.

In the method according to the invention typically each of the disturbances is linked with at least one corresponding opportunity for a corrective action.

Furthermore, it can be provided that in the method according to the invention the shop floor data are gained by means of a component of the manufacturing execution system.

Additionally, it can be provided that in the method according to the invention the shop floor data are gained by means of an external application.

Furthermore, a computer program element can be provided, comprising computer program code for performing steps according to the above mentioned method when loaded in a digital processor of a computing device.

Finally, a computer program product stored on a computer usable medium can be provided, comprising computer readable program code for causing a computing device to perform the mentioned method.

The invention and its embodiments will be more fully appreciated by reference to the following detailed description of presently preferred but nonetheless illustrative embodiments in accordance with the present invention when taken in conjunction with the accompanying drawings.

The figures are illustrating:
- Figure 1: a block diagram of a manufacturing execution system with a real time scheduler and a disturbance and opportunity detection logic,
- Figure 2: an example of a fishbone diagram, and
- Figure 3: an example of a fault tree analysis graph.

To solve the object of the invention a distinction is made between the phase of disturbances detection and the successive proper reactive management of the resulting schedule disruption. Moreover, a distinction is made between field events or conditions and disturbances to be managed.

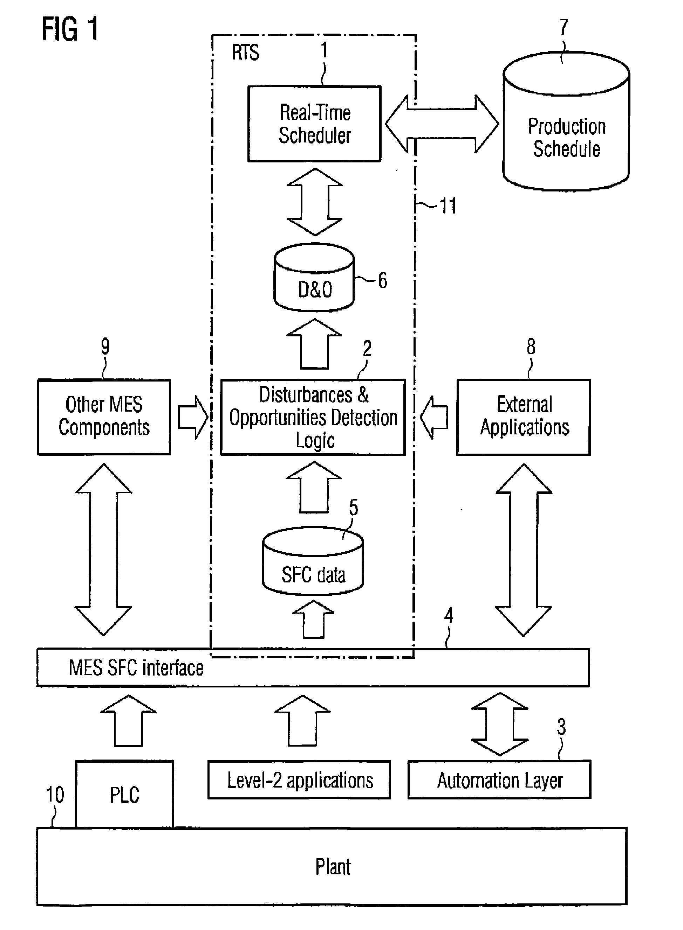

The system according to the invention, as depicted in Figure 1 comprises a series of unique characteristics. The system is based on a real-time agent based scheduler 1, or in short real-time scheduler, combined with a disturbances and opportunities detection logic 2, or in short detection logic or detection layer. The real-time scheduler 1 and the detection logic 2 are built-in in a manufacturing execution system. The integration with the manufacturing execution system provides a direct connection via a MES SFC interface 4 with an automation layer 3. The automation layer 3 allows the acquisition of field signals and data 5 and the dispatching of the required corrective actions. In the following, the field signals and data 5 are also called field information or shop floor information or shop floor control (SFC) data.

In the system according to the invention a distinction is made between the real-time agent-based scheduler layer 1 performing reactive scheduling actions and the disturbances and opportunities detection layer 2 analyzing shop floor information 5 to provide input to the real-time scheduler 1.

Within the detection layer 2, not only disturbances are detected but couples 6 of type: (disturbance, opportunity). Both elements of each couple 6 are intended to be passed to the agent-based scheduler 1 in order to perform the required corrective actions on the production plan or production schedule 7. It is assumed that for each disturbance detected within a part of the controlled system or plant 10, some opportunity arises regarding some other part of the plant 10 in conjunction with the same production plan 7. Controlling agents are provided to react in some way to the disturbances and in some other way to the opportunities detected.

The MES provides to the detection layer 2 a huge quantity of data regarding shop floor conditions and events 5. The task of the detection layer 2 is to analyze these shop floor conditions and events 5 and match them against the production schedule 7 to extract relevant disturbances and opportunities 6 that can lead to schedule disruptions.

The detection of disturbances and opportunities (D&O), which is based on the analysis of shop floor control (SFC) data 5, should take into account that the shop floor control data 5 are occasionally not independent since they can be linked by cause and effect relations. This implies that at a given time different simultaneously present SFC data 5 can be related to the same disturbances and opportunities 6.

The correlation between SFC data 5 can be mapped via a cause & effect relationship graph. The construction of this diagram can be done in a graphical way by experts of plant automation during the knowledge acquisition phase of the set-up of the system. During this phase, the experts of the plant automation transfer part of their knowledge about the specific plant into the automation logic that will be used for the control, the scheduling, the D&O detection and the forward-oriented re-scheduling after an opportunity has been identified to cure a detected disturbance. In a similar way the link between SFC data 5 and the consequent disturbances and opportunities can be expressed by mapping a network of if-then clauses and using graphical formats such as a tree diagram or fishbone diagram leading to each specific couple of disturbances and opportunities 6. This diagrams can be also considered as the cause&effect relationship graphs quoted above that are useful not only to map the link between the SFC data 5 and the consequent disturbance, but even to map correlation existing between SFC data itself. This kind of logic can be customized in the most complex cases by means of using general purpose business rules that can be modeled in a graphical way.

The system gives a structured way to represent, for each detected disturbance the corresponding opportunity (and vice versa) to be processed by the agent-based scheduler layer 1. In fact, even negative disturbances, e.g., a machine breakdown can hide some opportunity to be taken, e.g., the personnel attending to the stopped machine can be diverted to take care of some other urgent task.

The block diagram of Figure 1 illustrates an example of a structure where the disturbances and opportunities detection logic 2 receives information about SFC data 5 through the appropriate MES SFC interface 4 and other MES components 9. Furthermore, external applications 8 can contribute with their information to the cause-effect analysis that leads to the detection of disturbances and opportunities 6.

In the manufacturing execution system with a built-in real time scheduling engine 11, the distinction between the disturbances and opportunities detection 2 and the reactive scheduling layer 1 leads to a greater flexibility and capability to customize this kind of system for each specific plant 10.

Providing, at the same time, both disturbances and opportunities 6 to the agent-based scheduler layer 1 enhances the expressive power of such a system. The adoption of graphical business rule descriptions further enhances the customization capability of the system.

The use of for example a fishbone diagram, tree diagram and/or "five why's" facilitates the task of customizing the detection logic 2. Moreover, this allows the application or the re-use of analysis already performed during continuous improvement activities (Six Sigma or Total Quality Management) usually performed in the production environment.

Using a visual formalism, e.g. a cause-and-effect relation graph, makes it easier to represent the relations between facts or events 5 that can happen at the shop floor level 10 and abstract entities such as disturbances and opportunities 6 which will be used as input for the agent based control and rescheduling logic 1.

An embodiment of such a cause-and-effect relation graph can be realized for example as fishbone graph or as fault tree analysis diagram. In the following the fishbone graph and the fault tree analysis diagram will explained in more detail.

The fishbone graph, which is also called cause-and-effect diagram, Ishikawa diagram, or characteristic diagram, documents the factors or causes that contribute to or affect a given situation, that is, that lead to a certain effect. The fishbone graph is a drawing that contains category boxes, which represent the factors or causes, and a spine shape, where the arrows of the spine shape point to the effect.

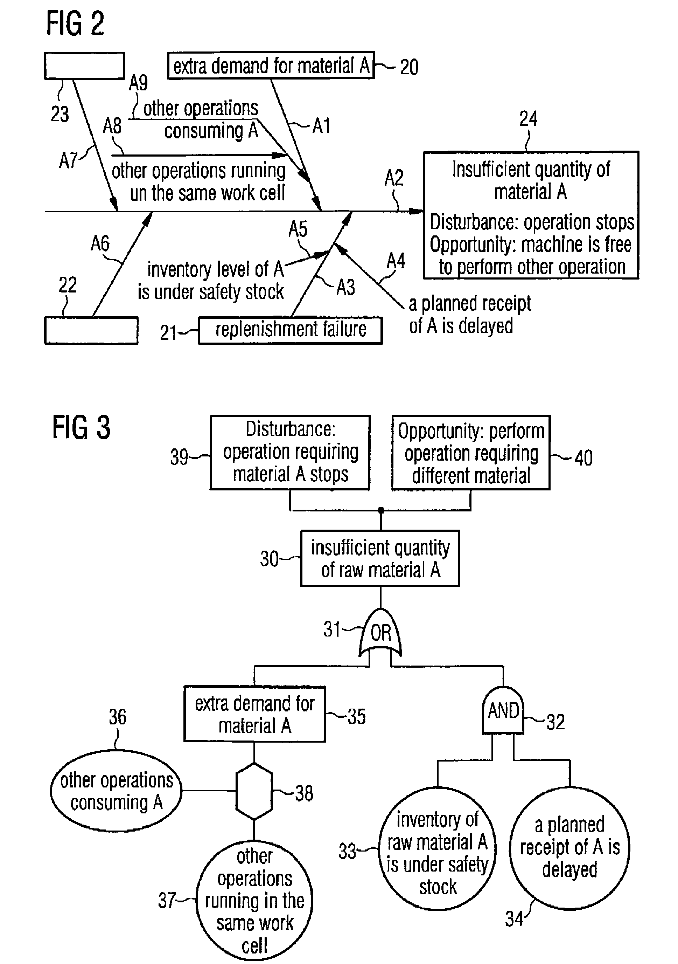

An example of a fishbone graph is depicted in Figure 2. An "extra demand for material A" is a cause and is therefore represented in a category box 20. A "replenishment failure" is a further cause and is therefore represented in a further category box 21. Additional category boxes 22 and 23 symbolize further causes. The links or arrows A1 and A2 show which effect the cause "extra demand for material A" has, namely that the quantity of material A is no longer sufficient. This effect is depicted in box 24. The arrows A3 and A2 show which effect the cause "replenishment failure" has. The arrows A3 and A2 point to an ultimate effect box 24, what means, that a replenishment failure leads to an insufficient quantity of material A. In principle, the arrows A4 to A9 show which cause has which effect. For example, the arrows A1 and A2 show that causes represented by category boxes 20 and 21 leads to the ultimate effect illustrated by the box 24. Additionally, the cause-and-effect relationship can be mutual in another example. A3 can be the cause of A2 but A3 can also the effect of A4 or A5.

In principle, an effect block comprises also the disturbance and the possible opportunity. In the example of Figure 2 the effect block 24 comprises the disturbance "operation stops" and the possible opportunity "machine is free to perform another operation".

The arrows A4, A5, A8, and A9 are used to represent secondary causes that under certain circumstances can be used to add even greater detail to the cause-and-effect estimation. Secondary causes can be for example "other operations consuming A", "other operations running in the same work cell", "inventory level of A is under safety stock", or "a planned receipt of A is delayed". The illustrated fishbone diagram is useful to clearly represent in the end box (here box 24) the ultimate effect and in the category boxes the general causes. Secondary, tertiary causes (arrows) are the facts observed in the reality and arrows are useful to represent their mutual relation to the general causes and ultimate effects. In the current example, the mutual relation between A8 and A9 is different from what relates to A4 and A5. The replacement failure (expressed by box 21 and arrow A3) occurs if A4 and/or A5 occurs. The extra demand for material A (box 20) occurs if both A8 and A9 occurs.

The fault tree analysis diagram can be used to illustrate events that might lead to a failure. By means of this knowledge a failure can be prevented. The fault tree analysis diagram can be used in a Six Sigma process, particularly in the analyze phase of the Six Sigma business improvements process. Failures that are analyzed in Six Sigma activities can be related with the production disturbance to be detected.

An example of a fault tree analysis diagram is depicted in Figure 3. If a planned receipt of material A is delayed (event block 34) and the inventory of raw material A is under safety stock (event block 33) the quantity of raw material A is no longer sufficient (block 30). The conjunction of the two events 33 and 34 is effected by AND-conjunction 32. An extra demand for material A (event block 35) also (OR-conjunction 31) leads to an insufficient quantity of raw material A. Other operations consuming material A (event block 36) and other operations running in the same work cell (event block 37) may lead to an extra demand for material A (event block 35). An "inhibit" symbol 38 represents the logical implications of the event blocks 36 and 37. The output condition of the inhibit symbol 38 is TRUE if all input conditions (37) are TRUE and the additional condition 36 is TRUE. It behaves here in the same way as an AND gate, thus not providing additional modeling capabilities. It is here useful to illustrate and to emphasize the fact that there is an additional condition (36) or pre-condition that must be verified.

For drawing up the fault tree analysis diagram one begins by defining the top event or failure 30. Then one can use event shapes 33, 34, 35, 36 and 37 and gate shapes 31, 32 and 38 to illustrate, top-down, the process that might lead to the failure 30. Once the fault tree analysis diagram is completed, one can use it to identify ways to eliminate causes for failure 30 and to devise corrective measures for preventing failure 30. Such a measure can be the opportunity to "perform an operation requiring different material" which is mentioned in box 40. The corresponding disturbance "operation requiring material A stops" is mentioned in box 39.

A similar approach can be adopted to capture and represent expert's knowledge about process dynamics and map cause-effect relationships between events, that can be collected at MES level, and disturbances and opportunities, that can drive the agent-oriented control logic 1.

In principle, with an agent-oriented software a distributed software system with a complex and difficult to see through total behavior can be developed. The distributed software system is regarded as a quantity of autonomous agents, who act independently within their decision framework and pursue thereby given goals. Agents can interact flexibly with one another and cooperate by negotiations, in order to achieve their individual goals. In the agent-oriented way of thinking a problem definition is abstracted into individual agents under the criteria autonomy, interaction, reactivity, goal orientation, pro activity and persistence in order to be able to describe, e.g., distributed information, functionality and decision-making processes. Therefore, it can be helpful to implement the scheduler 1 as agent based scheduler.

### Reference signs

- 1: real-time scheduler
- 2: disturbance and opportunity detection logic
- 3: automation layer
- 4: interface
- 5: shop field control data
- 6: disturbances and opportunities
- 7: production schedule
- 8: external applications
- 9: MES components
- 10: shop field
- 11: real-time scheduling engine
- A1 - A9: arrow 1 to arrow 9
- 20 - 23: causes
- 24: effect
- 30: effect or failure
- 31: OR- conjunction
- 32: AND-conjunction
- 33 - 37: events
- 38: INHIBIT-conjunction
- 39: disturbance
- 40: opportunity

## Claims

1. Method for production planning in a shop floor by means of a manufacturing execution system,
comprising the following steps:
- gaining shop floor data (5) from the shop floor (10),
- analyzing the shop floor data (5) by means of a detection logic (2) to detect a disturbance and to provide an opportunity for a corrective action, and
- generating a production schedule (7) based on the detected disturbance and opportunity for a corrective action by means of a scheduler (1).

2. Method according to claim 1,
wherein the generation of the production schedule (7) takes place in real time.

3. Method according to claim 1 or 2,
wherein the scheduler (1) is agent-based,

4. Method according to one of the previous claims 1, 2 or 3,
- wherein an analyzing step is provided for analyzing which event (20) has which effect (24) in the shop floor (10), and
- wherein the correlations between events (20, 21) and effects (24) are implemented in the detection logic (2).

5. Method according to claim 4,
wherein in the analyzing step the shop floor data (5) are mapped by means of a cause and effect relationship graph.

6. Method according to one of the previous claims 1 or 5,
wherein the detection logic (2) matches the shop floor data (5) with the production plan to gain the disturbance and opportunity for a corrective action.

7. Method according to one of the previous claims 1 or 6,
wherein each of the disturbances is linked with at least one corresponding opportunity for a corrective action.

8. Method according to one of the previous claims 1 to 7,
wherein the shop floor data (5) are gained by means of a component of the manufacturing execution system (3, 4, 9).

9. Method according to one of the previous claims 1 to 8.
wherein the shop floor data (5) are gained by means of an external application (8).

10. Computer program element,
comprising computer program code for performing steps according to the method as claimed in any one of the previous claims 1 to 9 when loaded in a digital processor of a computing device.

11. Computer program product stored on a computer usable medium,
comprising computer readable program code for causing a computing device to perform the method according to any one of the claims 1 to 9.
